# FASCICULE DE BREVET EUROPEEN

(11) **EP 2 923 620 B1**
(45) Date de publication et mention de la délivrance du brevet: **02.11.2016**
(21) Numéro de dépôt: 15160644.9
(22) Date de dépôt: 24.03.2015
(51) Int. Cl.: A47J 36/06, A47J 43/07, A47J 45/02, A47J 47/16

(54) **DISPOSITIF DE PRÉPARATION D'ALIMENTS COMPORTANT UN SOCLE AMOVIBLE FORMANT UN COUVERCLE DE CONSERVATION**
VORRICHTUNG ZUR LEBENSMITTELZUBEREITUNG, DIE EINEN ABNEHMBAREN SOCKEL UMFASST, DER ALS DECKEL FÜR DIE KONSERVIERUNG VERWENDET WERDEN KANN
DEVICE FOR PREPARING FOOD COMPRISING A MOVABLE PEDESTAL FORMING A PRESERVATION COVER

(30) Priorité: 28.03.2014 FR 1452717
(43) Date de publication de la demande: 30.09.2015
(73) Titulaire: SEB S.A., 69130 Ecully (FR)
(72) Inventeur: Rouyer, Philippe, 65290 Juillan (FR); Suberbie, Nicolas, 65360 Momères (FR)
(74) Mandataire: Cémeli, Eric Philippe Laurent

(56) Documents cités:
- US-A- 3 078 005
- US-A1- 2007 029 333
- US-A1- 2011 147 559

## Description

La présente invention concerne le domaine technique des dispositifs de préparation d'aliments comportant un récipient de travail, un outil de travail, ainsi qu'un boîtier supérieur disposé sur le récipient de travail et comportant une sortie d'entraînement pour entraîner en rotation l'outil de travail disposé dans le récipient de travail.

La présente invention concerne notamment, mais non exclusivement, les appareils électroménagers de préparation culinaire comportant un boîtier supérieur logeant un moteur électrique entraînant en rotation l'organe d'entraînement.

La présente invention concerne également les accessoires d'appareils électroménagers de préparation culinaires comportant un boîtier supérieur présentant un organe d'entraînement prévu pour être entraîné par un boîtier motorisé amovible, ledit organe d'entraînement étant relié à la sortie d'entraînement.

Il est connu du document CN103479245 un dispositif de préparation d'aliments comportant un socle antidérapant disposé sous le récipient de travail. Il est également connu du document US-A1-2007/0029333 un dispositif de préparation d'aliments comportant un récipient de travail et un socle amovible pouvant être disposé sous le récipient de travail et comportant une surface d'appui annulaire prévue pour reposer sur le récipient de travail lorsque le socle est retourné sur le récipient de travail.

Un objet de la présente invention est d'améliorer les fonctionnalités d'un dispositif de préparation d'aliments du type précité.

Cet objet est atteint avec un dispositif de préparation d'aliments, comportant un récipient de travail, un outil de travail, un boîtier supérieur comportant une sortie d'entraînement pour entraîner en rotation l'outil de travail disposé dans le récipient de travail, et un socle amovible pouvant être disposé sous le récipient de travail, du fait que le socle comporte une surface d'appui annulaire prévue pour reposer sur le récipient de travail lorsque le socle est retourné sur le récipient de travail, et que le socle comporte une protubérance annulaire élastiquement déformable s'étendant autour de la surface d'appui annulaire, la protubérance annulaire comprenant une collerette interne prévue pour venir en prise avec un rebord extérieur du récipient de travail lorsque le socle est retourné sur le récipient de travail, la protubérance annulaire étant réalisée en matière plus souple que la matière du rebord extérieur du récipient de travail. Le socle amovible peut ainsi être utilisé comme couvercle de conservation pour fermer le récipient de travail. Par rapport à un dispositif de préparation d'aliments comportant un socle amovible simplement prévu pour porter le récipient de travail, les modifications à apporter au socle et au récipient de travail sont simples à réaliser et peu onéreuses.

Selon une forme de réalisation avantageuse, le rebord extérieur est annulaire. Cette disposition permet d'obtenir une meilleure étanchéité entre le socle retourné et le récipient de travail. En alternative, le rebord extérieur pourrait notamment comporter plusieurs segments.

Avantageusement encore, le rebord extérieur est issu d'un bord supérieur du récipient de travail. Cette disposition permet de simplifier la réalisation du récipient de travail, tout en contribuant à l'obtention d'une meilleure étanchéité.

Avantageusement encore, le socle comporte une bordure extérieure agencée en périphérie de la protubérance annulaire. Cette disposition permet de faciliter le retrait du socle utilisé comme couvercle de conservation sur le récipient de travail.

Avantageusement alors, la bordure extérieure est annulaire. Cette disposition permet de faciliter encore davantage le retrait du socle utilisé comme couvercle de conservation sur le récipient de travail.

Avantageusement encore, la protubérance annulaire comporte une charnière élastique agencée entre la collerette interne et la surface d'appui annulaire. Cette disposition permet également de simplifier la réalisation du socle, tout en contribuant à l'obtention d'une meilleure étanchéité.

Avantageusement encore, la surface d'appui annulaire est réalisée en matière plus souple que la matière du rebord extérieur du récipient de travail. Cette disposition permet une meilleure étanchéité entre le récipient de travail et le socle retourné sur le récipient de travail.

Avantageusement encore, le socle est réalisé en matière plus souple que la matière du rebord extérieur du récipient de travail. Le socle peut notamment être réalisé en une seule matière. En alternative, le socle pourrait notamment comporter une ou plusieurs parties surmoulées, par exemple en élastomère.

Selon une forme de réalisation avantageuse, le socle est réalisé en PEBD. Une telle réalisation est particulièrement simple et économique.

Avantageusement encore, le socle comporte un organe de retenue latérale pour bloquer latéralement le récipient de travail disposé sur le socle. L'organe de retenue latérale est ainsi adjacent à la surface d'appui annulaire.

Alors, selon une forme de réalisation avantageuse, le récipient de travail comporte une bordure inférieure d'appui disposée en périphérie de l'organe de retenue latérale lorsque le récipient de travail est disposé sur le socle.

Selon un mode de réalisation, le boîtier supérieur loge un moteur électrique entraînant en rotation la sortie d'entraînement. En alternative, le boîtier supérieur peut présenter un organe d'entraînement prévu pour être entraîné par un boîtier motorisé amovible, ledit organe d'entraînement étant relié à la sortie d'entraînement pour entraîner l'outil de travail disposé dans le récipient de travail.

L'invention sera mieux comprise à l'étude d'un exemple de réalisation, pris à titre nullement limitatif, illustré dans les figures annexées, dans lesquelles :
- la figure 1 est une vue en élévation et en coupe d'un dispositif de préparation d'aliments selon l'invention, comportant un socle et un récipient de travail,
- la figure 2 est une vue en élévation et en coupe du socle du dispositif de préparation d'aliments illustré sur la figure 1 retourné sur le récipient de travail.
- la figure 3 est une vue partielle agrandie de la figure 2.

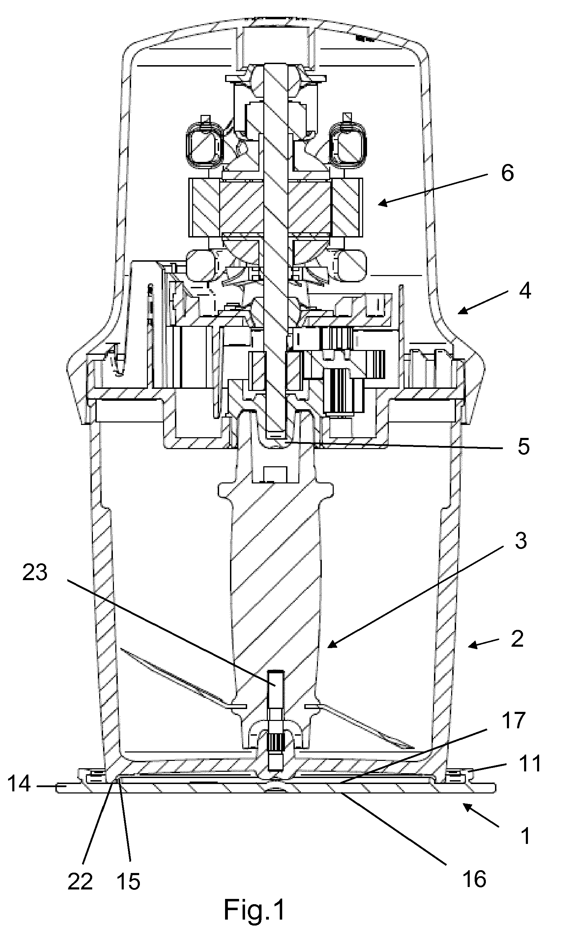

Le dispositif de préparation d'aliments illustré sur la figure 1 comporte un récipient de travail 2, un outil de travail 3, un boîtier supérieur 4 et un socle 1 amovible pouvant être disposé sous le récipient de travail 2. Le boîtier supérieur 4 comporte une sortie d'entraînement 5 pour entraîner en rotation l'outil de travail 3 disposé dans le récipient de travail 2.

Le socle 1 comporte une face d'appui 16 prévue pour reposer sur un plan de travail. Le socle 1 comporte une face de support 17 opposée à la surface d'appui 16. La face de support 17 est prévue pour porter le récipient de travail 2 disposé sur le socle 1, tel que visible sur la figure 1.

Dans l'exemple de réalisation illustré sur les figures, le socle 1 comporte un organe de retenue latérale 15 pour bloquer latéralement le récipient de travail 2 disposé sur le socle 1. L'organe de retenue latérale 15 est issu de la face de support 17. Plus particulièrement dans l'exemple de réalisation illustré sur les figures, l'organe de retenue latérale 15 est annulaire.

Le récipient de travail 2 présente un bord supérieur 25. Le récipient de travail 2 comporte un fond 20 et une paroi latérale 21. Le récipient de travail 2 peut notamment être réalisé en matière plastique rigide. Le diamètre extérieur du fond 20 est inférieur au diamètre extérieur du bord supérieur 25. Plus particulièrement dans l'exemple de réalisation illustré sur les figures, le récipient de travail 2 comporte une bordure inférieure d'appui 22 proéminente par rapport à la face inférieure du fond 20. Tel que visible sur la figure 1, la bordure inférieure d'appui 22 est annulaire et est disposée dans le prolongement de la paroi latérale 21. Ainsi la bordure inférieure d'appui 22 est disposée en périphérie de l'organe de retenue latérale 15 lorsque le récipient de travail 2 est disposé sur le socle 1. En d'autres termes, la bordure inférieure d'appui 22 entoure l'organe de retenue latérale 15, tel que visible sur la figure 1.

L'outil de travail 3 illustré sur la figure 1 est du type coupant et comporte deux lames inclinées. A titre de variante, d'autres types d'outil de travail 3 coupant ou non coupant peuvent être envisagés, notamment des outils de travail pour broyer, pour mélanger, pour émulsionner.

L'outil de travail 3 illustré sur la figure 1 est monté sur un axe métallique 23 rapporté à l'intérieur du récipient de travail 2. A titre de variante, l'outil de travail 3 peut notamment comporter un pied rotatif prenant appui sur le fond du récipient de travail 2, ou être porté par la sortie d'entraînement 5.

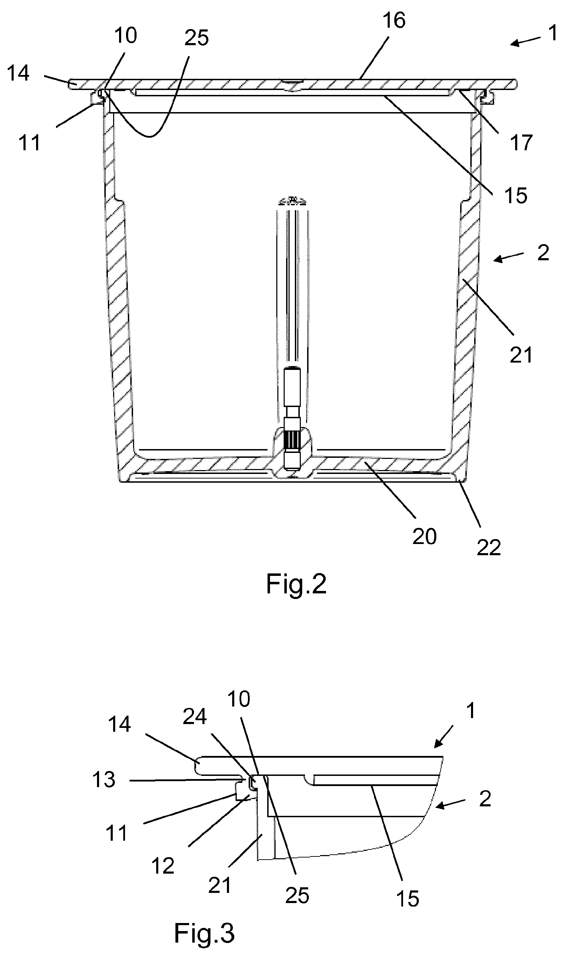

Plus particulièrement selon l'invention, le socle 1 comporte une surface d'appui annulaire 10 prévue pour reposer sur le récipient de travail 2 lorsque le socle 1 est retourné sur le récipient de travail 2, tel que représenté sur les figures 2 et 3. Le socle 1 comporte une protubérance annulaire 11 élastiquement déformable s'étendant autour de la surface d'appui annulaire 10. La protubérance annulaire 11 est ainsi agencée en périphérie de la surface d'appui annulaire 10. Tel que mieux visible sur la figure 3, la protubérance annulaire 11 comprend une collerette interne 12 prévue pour venir en prise avec un rebord extérieur 24 du récipient de travail 2 lorsque le socle 1 est retourné sur le récipient de travail 2.

Dans l'exemple de réalisation illustré sur les figures, le rebord extérieur 24 est annulaire. Le rebord extérieur 24 entoure ainsi la paroi latérale 21. Par ailleurs, le rebord extérieur 24 est issu du bord supérieur 25 du récipient de travail 2.

De manière préférée, le socle 1 comporte une bordure extérieure 14 agencée en périphérie de la protubérance annulaire 11. Dans l'exemple de réalisation illustré sur les figures, la bordure extérieure 14 est annulaire. A titre de variante, la bordure extérieure 14 peut former au moins une languette de préhension pour dégager la collerette interne 12 du rebord extérieur 24.

Dans l'exemple de réalisation illustré sur les figures, la protubérance annulaire 11 comporte une charnière élastique 13 agencée entre la collerette interne 12 et la surface d'appui annulaire 10. Tel que mieux visible sur la figure 3, la section de la charnière élastique 13 est inférieure à la hauteur de la protubérance annulaire 11. La collerette interne 12 peut ainsi pivoter par rapport à la surface d'appui annulaire 10 par déformation de la charnière élastique 13.

Dans l'exemple de réalisation illustré sur les figures, le socle 1 est réalisé en matière plus souple que le récipient de travail 2. La protubérance annulaire 11 est ainsi réalisée en matière plus souple que la matière du rebord extérieur 24 du récipient de travail 2. La surface d'appui annulaire 10 prévue pour reposer sur le bord supérieur 25 du récipient de travail 2 est aussi réalisée en matière plus souple que la matière du rebord extérieur 24 du récipient de travail 2. De préférence, le socle 1 est réalisé en une seule matière. Le socle 1 est par exemple réalisé en polyéthylène basse densité (PEBD). A titre de variante, le socle 1 pourrait notamment être réalisé au moins partiellement en élastomère.

Dans l'exemple de réalisation illustré sur les figures, le boîtier supérieur 4 loge un moteur électrique 6 entraînant en rotation la sortie d'entraînement 5. Le boîtier supérieur 4 comporte un dispositif de commande associé au moteur électrique 6, non représenté sur les figures. Le dispositif de préparation d'aliments forme ainsi un appareil électroménager de préparation culinaire.

Le dispositif de préparation d'aliments selon l'invention s'utilise et fonctionne de la manière suivante.

Pour réaliser une préparation d'aliments, l'utilisateur dispose le socle 1 sur un plan de travail avec la face de support 17 apparente. L'utilisateur dispose ensuite le récipient de travail 2 sur le socle 1, l'outil de travail 3 dans le récipient de travail 2, les ingrédients à transformer dans le récipient de travail 2, le boîtier supérieur 4 sur le récipient de travail 2, la sortie d'entraînement 5 venant en prise avec l'outil de travail 3, et met en marche l'appareil électroménager de préparation culinaire pour entraîner en rotation l'outil de travail 3 dans le récipient de travail 2.

Lorsque la préparation a été obtenue, l'utilisateur retire le boîtier supérieur 4, l'outil de travail 3, récupère le socle 1 et dispose le socle 1 retourné sur le récipient de travail 2. La protubérance annulaire 11 est alors déformée pour amener la collerette interne 12 en prise avec le rebord extérieur 24 du récipient de travail 2. La surface d'appui annulaire 10 du socle 1 repose alors sur le bord supérieur 25 du récipient de travail 2. La collerette interne 12 venant en prise avec le rebord extérieur 24 du récipient de travail 2 maintient la surface d'appui annulaire 10 du socle 1 sur le bord supérieur 25 du récipient de travail 2.

Pour séparer le récipient de travail 2 et le socle 1 utilisé comme couvercle de conservation, l'utilisateur peut soulever la bordure extérieure 14 du socle 1 et la déformer localement pour dégager la collerette interne 12 du rebord extérieur du récipient de travail 2.

Le socle 1 utilisé avec le récipient de travail 2 forme ainsi un support amortisseur lors de l'utilisation de l'outil de travail 3 pour préparer les aliments, puis un couvercle de conservation lorsque la préparation a été réalisée.

A titre de variante, le socle 1 n'est pas nécessairement entièrement réalisé en matière plus souple que la matière du rebord extérieur 24 du récipient de travail 2. Si désiré, une ou plusieurs parties du socle 1 comprenant la protubérance annulaire 11 peuvent être réalisées en matière plus souple que la matière du rebord extérieur 24 du récipient de travail 2, au moins une autre partie du socle 1 étant réalisée en matière plus rigide. Le socle 1 peut notamment comporter une ou plusieurs parties en élastomère surmoulées sur une ou plusieurs parties réalisées en matière plus rigide.

A titre de variante, le rebord extérieur 24 n'est pas nécessairement issu du bord supérieur 25 du récipient de travail 2. Le rebord extérieur 24 peut notamment être issu de la paroi latérale 21.

A titre de variante, le rebord extérieur 24 n'est pas nécessairement annulaire. Le rebord extérieur 24 n'est pas nécessairement continu et peut notamment comporter un ou plusieurs segments séparés par des portions de la paroi latérale 21 du récipient de travail 2.

A titre de variante, l'organe de retenue latérale 15 n'est pas nécessairement annulaire. L'organe de retenue latérale 15 n'est pas nécessairement continu et peut par exemple comporter plusieurs segments. L'organe de retenue latérale 15 peut notamment comporter une ou plusieurs conformations prévues pour venir en prise avec le récipient de travail 2.

A titre de variante, la bordure extérieure 14 n'est pas nécessairement annulaire. Notamment, la bordure extérieure 14 du socle 1 peut s'étendre sur une partie seulement de la circonférence du socle 1 et former une languette ou un appendice pouvant être utilisé comme organe de préhension pour retirer le socle 1 du récipient de travail 2. Si désiré, la bordure extérieure 14 peut alors être réalisée en matière plus rigide que la protubérance annulaire 11.

A titre de variante, le boîtier supérieur 4 ne loge pas nécessairement un moteur électrique 6 entraînant en rotation la sortie d'entraînement 5. En alternative, le boîtier supérieur 5 peut notamment présenter un organe d'entraînement prévu pour être entraîné par un boîtier motorisé amovible, ledit organe d'entraînement étant relié à la sortie d'entraînement 5 pour entraîner en rotation l'outil de travail 3 disposé dans le récipient de travail 2.

La présente invention n'est nullement limitée à l'exemple de réalisation décrit et à ses variantes, mais englobe de nombreuses modifications dans le cadre des revendications.

## Revendications

1. Dispositif de préparation d'aliments, comportant un récipient de travail (2), un outil de travail (3), un boîtier supérieur (4) comportant une sortie d'entraînement (5) pour entraîner en rotation l'outil de travail (3) disposé dans le récipient de travail (2), et un socle (1) amovible pouvant être disposé sous le récipient de travail (2), **caractérisé en ce que** le socle (1) comporte une surface d'appui annulaire (10) prévue pour reposer sur le récipient de travail (2) lorsque le socle (1) est retourné sur le récipient de travail (2) et **en ce que** le socle (1) comporte une protubérance annulaire (11) élastiquement déformable s'étendant autour de la surface d'appui annulaire (10), la protubérance annulaire (11) comprenant une collerette interne (12) prévue pour venir en prise avec un rebord extérieur (24) du récipient de travail (2) lorsque le socle (1) est retourné sur le récipient de travail (2), la protubérance annulaire (11) étant réalisée en matière plus souple que la matière du rebord extérieur (24) du récipient de travail (2).

2. Dispositif de préparation d'aliments selon la revendication 1, **caractérisé en ce que** le rebord extérieur (24) est annulaire.

3. Dispositif de préparation d'aliments selon l'une des revendications 1 ou 2, **caractérisé en ce que** le rebord extérieur (24) est issu d'un bord supérieur (25) du récipient de travail (2).

4. Dispositif de préparation d'aliments selon l'une des revendications 1 à 3, **caractérisé en ce que** le socle (1) comporte une bordure extérieure (14) agencée en périphérie de la protubérance annulaire (11).

5. Dispositif de préparation d'aliments selon la revendication 4, **caractérisé en ce que** la bordure extérieure (14) est annulaire.

6. Dispositif de préparation d'aliments selon l'une des revendications 1 à 5, **caractérisé en ce que** la protubérance annulaire (11) comporte une charnière élastique (13) agencée entre la collerette interne (12) et la surface d'appui annulaire (10).

7. Dispositif de préparation d'aliments selon l'une des revendications 1 à 6, **caractérisé en ce que** la surface d'appui annulaire (10) est réalisée en matière plus souple que la matière du rebord extérieur (24) du récipient de travail (2).

8. Dispositif de préparation d'aliments selon l'une des revendications 1 à 7, **caractérisé en ce que** le socle (1) est réalisé en matière plus souple que la matière du rebord extérieur (24) du récipient de travail (2).

9. Dispositif de préparation d'aliments selon l'une des revendications 1 à 8, **caractérisé en ce que** le socle (1) est réalisé en PEBD.

10. Dispositif de préparation d'aliments selon l'une des revendications 1 à 9, **caractérisé en ce que** le socle (1) comporte un organe de retenue latérale (15) pour bloquer latéralement le récipient de travail (2) disposé sur le socle (1).

11. Dispositif de préparation d'aliments selon la revendication 10, **caractérisé en ce que** le récipient de travail (2) comporte une bordure inférieure d'appui (22) disposée en périphérie de l'organe de retenue latérale (15) lorsque le récipient de travail (2) est disposé sur le socle (1).

12. Dispositif de préparation d'aliments selon l'une des revendications 1 à 11, **caractérisé en ce que** le boîtier supérieur (4) loge un moteur électrique (6) entraînant en rotation la sortie d'entraînement (5).

## Patentansprüche

1. Vorrichtung zur Zubereitung von Lebensmitteln mit einem Arbeitsbehälter (2), einem Arbeitswerkzeug (3), einem oberen Gehäuse (4), das einen Antriebsausgang (5) aufweist, der das Arbeitswerkzeug (3), das im Arbeitsbehälter (2) angeordnet ist, in Drehung versetzt, und mit einem abnehmbaren Sockel (1), der unter dem Arbeitsbehälter (2) angebracht werden kann, **dadurch gekennzeichnet, dass** der Sockel (1) eine ringförmige Aufsatzfläche (10) aufweist, die dafür vorgesehen ist, auf dem Arbeitsbehälter (2) aufzuliegen, wenn der Sockel (1) auf den Arbeitsbehälter (2) aufgedreht wird, und dass der Sockel (1) eine ringförmige, elastisch verformbare Erhöhung (11) umfasst, die sich um die ringförmige Aufsatzfläche (10) herum erstreckt, wobei die ringförmige Erhöhung (11) einen inneren Ring (12) aufweist, der dazu vorgesehen ist, mit dem äußeren Rand (24) des Arbeitsbehälters (2) in Eingriff zu kommen, wenn der Sockel (1) auf den Arbeitsbehälter (2) aufgedreht wird, wobei die ringförmige Erhöhung (11) aus einem weicheren Material besteht als der äußere Rand (24) des Arbeitsbehälters (2).

2. Vorrichtung zur Zubereitung von Lebensmitteln nach Anspruch 1, **dadurch gekennzeichnet, dass** der äußere Rand (24) ringförmig ist.

3. Vorrichtung zur Zubereitung von Lebensmitteln nach einem der Ansprüche 1 oder 2, **dadurch gekennzeichnet, dass** der äußere Rand (24) aus dem oberen Rand (25) des Arbeitsbehälters (2) hervorgeht.

4. Vorrichtung zur Zubereitung von Lebensmitteln nach einem der Ansprüche 1 bis 3, **dadurch gekennzeichnet, dass** der Sockel (1) über eine äußere Kante (14) verfügt, die an der Außenseite der ringförmigen Erhöhung (11) liegt.

5. Vorrichtung zur Zubereitung von Lebensmitteln nach Anspruch 4, **dadurch gekennzeichnet, dass** die äußere Kante (14) ringförmig ist.

6. Vorrichtung zur Zubereitung von Lebensmitteln nach einem der Ansprüche 1 bis 5, **dadurch gekennzeichnet, dass** die ringförmige Erhöhung (11) ein bewegliches Scharnier (13) umfasst, das sich zwischen dem inneren Ring (12) und der ringförmigen Aufsatzfläche (10) befindet.

7. Vorrichtung zur Zubereitung von Lebensmitteln nach einem der Ansprüche 1 bis 6, **dadurch gekennzeichnet, dass** die ringförmige Aufsatzfläche (10) aus einem weicheren Material besteht als der äußere Rand (24) des Arbeitsbehälters (2).

8. Vorrichtung zur Zubereitung von Lebensmitteln nach einem der Ansprüche 1 bis 7, **dadurch gekennzeichnet, dass** der Sockel (1) aus einem weicheren Material besteht als der äußere Rand (24) des Arbeitsbehälters (2).

9. Vorrichtung zur Zubereitung von Lebensmitteln nach einem der Ansprüche 1 bis 8, **dadurch gekennzeichnet, dass** der Sockel (1) aus LDPE besteht.

10. Vorrichtung zur Zubereitung von Lebensmitteln nach einem der Ansprüche 1 bis 9, **dadurch gekennzeichnet, dass** der Sockel (1) ein seitliches Befestigungselement (15) zur seitlichen Arretierung des auf dem Sockel (1) befindlichen Arbeitsbehälters (2) aufweist.

11. Vorrichtung zur Zubereitung von Lebensmitteln nach Anspruch 10, **dadurch gekennzeichnet, dass** der Arbeitsbehälter (2) eine untere Aufsatzkante (22) aufweist, die sich, wenn der Arbeitsbehälter (2) auf dem Sockel (1) platziert wird, am Umfang des seitlichen Befestigungselements (15) befindet.

12. Vorrichtung zur Zubereitung von Lebensmitteln nach einem der Ansprüche 1 bis 11, **dadurch gekennzeichnet, dass** im oberen Gehäuse (4) ein elektrischer Motor (6) untergebracht ist, der den Antriebsausgang (5) in Drehung versetzt.

## Claims

1. Apparatus for preparing food, comprising a working receptacle (2), a working tool (3), an upper box (4) having a drive output (5) for rotating the working tool (3) arranged in the working receptacle (2), and a removable base (1) that can be arranged under the working receptacle (2), **characterised in that** the base (1) comprises an annular bearing surface (10) intended to rest on the working receptacle (2) when the base (1) is turned over on the working receptacle (2) and **in that** the base (1) has an elastically deformable annular protuberance (11) extending around the annular bearing surface (10), the annular protuberance (11) comprising an inner collar (12) designed to engage with an outer rim (24) of the working receptacle (2) when the base (1) is turned over on the working receptacle (2), the annular protuberance (11) being made of softer material than the material of the outer rim (24) of the working receptacle (2).

2. Apparatus for preparing food according to claim 1, **characterised in that** the outer rim (24) is annular.

3. Apparatus for preparing food according to claim 1 or 2, **characterised in that** the outer rim (24) comes from an upper edge (25) of the working receptacle (2).

4. Apparatus for preparing food according to one of claims 1 to 3, **characterised in that** the base (1) has an outer edge (14) arranged on the periphery of the annular protuberance (11).

5. Apparatus for preparing food according to claim 4, **characterised in that** the outer edge (14) is annular.

6. Apparatus for preparing food according to one of claims 1 to 5, **characterised in that** the annular protuberance (11) has a resilient hinge (13) arranged between the inner collar (12) and the annular bearing surface (10).

7. Apparatus for preparing food according to one of claims 1 to 6, **characterised in that** the annular bearing surface (10) is made of softer material than the material of the outer rim (24) of the working receptacle (2).

8. Apparatus for preparing food according to one of claims 1 to 7, **characterised in that** the base (1) is made of softer material than the material of the outer rim (24) of the working receptacle (2).

9. Apparatus for preparing food according to one of claims 1 to 8, **characterised in that** the base (1) is made of LDPE.

10. Apparatus for preparing food according to one of claims 1 to 9, **characterised in that** the base (1) has a lateral retaining member (15) to laterally lock the working receptacle (2) arranged on the base (1).

11. Apparatus for preparing food according to claim 10, **characterised in that** the working receptacle (2) comprises a lower support edge (22) arranged on the periphery of the lateral retaining member (15) when the working receptacle (2) is arranged on the base (1).

12. Apparatus for preparing food according to one of claims 1 to 11, **characterised in that** the upper box (4) houses an electric motor (6) rotating the drive output (5).
